# EUROPÄISCHE PATENTSCHRIFT

(11) **EP 0 976 695 B1**
(45) Veröffentlichungstag und Bekanntmachung des Hinweises auf die Patenterteilung: **18.09.2002**
(21) Anmeldenummer: 99114591.3
(22) Anmeldetag: 26.07.1999
(51) Int. Cl.: C04B 22/14, C04B 7/52

(54) **Verwendung von Zinn-II-sulphat als Mahlhilfsmittel für Zement**
Use of tin-II-sulphate as a Grinding aid for cement
Utilisation de sulfate d'étain-II comme Agent de broyage pour ciment

(30) Priorität: 25.07.1998 DE 19833603
(43) Veröffentlichungstag der Anmeldung: 02.02.2000
(73) Patentinhaber: Economic Versicherungs-Vermittlung GmbH, 40880 Ratingen (DE)
(72) Erfinder: Schrewe, Franz, 33154 Salzkotten (DE); Krell, Jürgen, Dr., 40723 Hilden (DE)
(74) Vertreter: Becker, Thomas, Dr., Dipl.-Ing.

(56) Entgegenhaltungen:
- EP-A- 0 226 379
- EP-A- 0 351 550
- EP-A- 0 696 557
- DE-A- 2 653 443
- US-A- 4 572 739
- US-A- 5 352 254
- DATABASE WPI Section Ch, Week 198704 Derwent Publications Ltd., London, GB; Class A81, AN 1987-028759 XP002122261 & SU 1 237 406 A (AS UKR HARD MATERIALS), 15. Juni 1986 (1986-06-15)

## Beschreibung

Gegenstand der Erfindung ist die Verwendung von Zinn(II) Sulfat als Mahlhilfsmittel für körnige bis pulverförmige, zementhaltige Zubereitungen.

Es ist aus DE-A- 26 53 443 bekannt, Zinn (II) Sulfat einem Klinker vor dessen Vermahlung als Abbindeverzögerer zuzugeben.

Zement ist ein hydraulisches Bindemittel, nämlich ein anorganischer, feingemahlener Stoff, der, mit Wasser angemacht, Zementleim ergibt, welcher durch Hydratation erstarrt und erhärtet und nach dem Erhärten auch unter Wasser fest und raumbeständig bleibt.

Zement besteht aus dem Hauptbestandteil Portlandzementklinker, Nebenbestandteilen wie Hüttensand, Puzzolan, Flugasche, Kalkstein und/oder Füller sowie einer calciumsulfathaltigen Komponente und sogenannten Zementzusatzmitteln. Die Zementbestandteile müssen hinsichtlich ihrer Zusammensetzung statistisch betrachtet homogen sein. Eine hohe Gleichmäßigkeit aller Zementeigenschaften muß durch eine kontinuierliche Herstellung in großen Massenströmen, insbesondere durch adäquate Mahl- und Homogenisierungsverfahren, erzielt werden.

Unter diesem Gesichtspunkt kommt den Mahlhilfsmitteln (als Zementzusatzmittel) eine wichtige Bedeutung zu.

Mahlhilfsmittel haben insbesondere die Aufgabe, bei der Zementklinker- oder Kalksteinmahlung eine höhere Mahlfeinheit des Mahlgutes zu ermöglichen. Ihre Aufgabe besteht auch darin, Anbackungen des Mahlgutes im Mahlaggregat (in der Mühle) soweit wie möglich zu verhindern und/oder Agglomerate des Mahlgutes aufzulösen.

In der Regel wird das Zement-Rohmaterial trocken vermahlen. Bei der trockenen Aufbereitung werden die Rohmaterialkomponenten über Dosiereinrichtungen einer Mühle in einem bestimmten Mischungsverhältnis aufgegeben und zu Rohmehl feingemahlen.

Während des Mahlvorgangs kommt es zu einer Erwärmung des Mahlgutes, wobei die Temperatur des aus dem Mahlaggregat entnommenen Mahlgutes 80 bis 120°C betragen kann. Typische Mahlaggregate sind Rohrmühlen (Kugelmühlen), aber auch Wälzmühlen.

Die Wirksamkeit bekannter Mahlhilfsmittel ist sehr unterschiedlich. Zu den bekannten Mahlhilfsmitteln zählen Triethanolamin (TEA), verschiedene Carbonsäuren beziehungsweise deren Salze wie Octadecansäure oder deren Natrium-Salz.

Die Zugabemenge, bezogen auf das Mahlgut, liegt typischerweise zwischen 0,05 und 0,2 Gew.-%, liegt teilweise aber auch deutlich darüber.

In der Praxis erfolgt insoweit die Auswahl eines geeigneten Mahlhilfsmittels dahingehend, daß eine Optimierung insbesondere folgender Kenngrößen angestrebt wird: Verhinderung von Anbackungen im Mahlaggregat, Erzielung einer möglichst hohen Mahlfeinheit beziehungsweise großen spezifischen Oberfläche des Mahlgutes, Verbesserung der Fließfähigkeit des Mahlgutes, Homogenisierung des Mahlgutes, Auflösung von Agglomeraten des Mahlgutes, Reduzierung der Mahlhilfsmittel-Kosten.

Der Erfindung liegt die Aufgabe zugrunde, ein Mahlhilfsmittel zu verwenden, welches den vorgenannten Kriterien Rechnung trägt.

Überraschend wurde jetzt gefunden, daß Zinn(II)sulfat den genannten Anforderungen entspricht.

Zinn(II)sulfat besteht aus weißen bis gelblichen Kristallen, die in verdünnter Schwefelsäure löslich sind. Die wässrige Lösung scheidet beim Stehen basisches Sulfat ab. Die Löslichkeit in Wasser sinkt mit steigender Temperatur, wobei erst oberhalb 360°C eine Zersetzung eintritt.

Ausgehend von den vorgenannten typischen Temperaturen des Mahlgutes am Entnahmeende des Mahlaggregates (80 bis 120°C) erweist sich Zinn(II)sulfat damit als durchgehend beständiges Mahlhilfsmittel für zementhaltige Zubereitungen, insbesondere Portlandzementklinker alleine oder in Kombination mit Zement-Nebenbestandteilen, einem Calciumsulfatträger beziehungsweise weitere Zusatzmitteln.

Im Gegensatz zu bekannten Mahlhilfsmitteln, die bereits bei Temperaturen von etwa 80°C verdampfen und deshalb in erheblich überdosierter Form zugegeben werden müssen kann Zinn(II)sulfat in der zur Erzielung des gewünschten Mahleffektes notwendigen begrenzten Menge zugesetzt werden.

Die Konfektionierung des Zinn(II)sulfates kann sowohl in pulverförmiger Form als auch in Lösung erfolgen. Die Zugabe als Lösung, beispielsweise als wässrige Lösung, ist in Bezug auf die Reaktionsfähigkeit insbesondere des Portlandzementklinkers unschädlich, da die Wassermenge, bezogen auf das Mahlgut, minimal ist und bei den genannten Temperaturen im Mahlaggregat ohnehin weitestgehend verdampft.

Die Verwendung von Zinn(II)sulfat als Mahlhilfsmittel ist auch deshalb überraschend, weil Zinn(II)sulfat bisher für völlige andere Anwendungen, beispielsweise zur galvanischen Verzinnung oder zur elektrolytischen Metallsalz-Einfärbung von Aluminium eingesetzt wurde.

## Patentansprüche

1. Verwendung von Zinn(II)Sulfat als Mahlhilfsmittel für körnige bis pulverförmige, zementhaltige Zubereitungen.

2. Verwendung nach Anspruch 1, bei der das Zinn(II)Sulfat als Lösung eingesetzt wird.

3. Verwendung nach Anspruch 2, bei der das Zinn(II)Sulfat als wässrige Lösung eingesetzt wird.

4. Verwendung nach Anspruch 1, bei der das Zinn(II)Sulfat als pulverförmiges Material eingesetzt wird.

## Claims

1. Use of Stannosulfat as grinding auxiliary for grained to powdery preparations which contain cement.

2. Use according to claim 1, wherein the Stannosulfat is employed as solution.

3. Use according to claim 2, wherein the Stannosulfat is employed as aqueous solution.

4. Use according to claim 1, wherein the Stannosulfat is employed as powdery material.

## Revendications

1. Usage de stannosulfat comme agent auxiliare à mouture pour préparations contenant du ciment granulées jusqu'à pulvérulentes.

2. Usage selon la revendication 1, dans lequelle le stannosulfat est employé comme solution.

3. Usage selon la revendication 2, dans lequelle le stannosulfat est employé comme solution aqueux.

4. Usage selon la revendication 1, dans lequelle le stannosulfat est employé comme matière pulvérulent.
